# EUROPEAN PATENT APPLICATION

(11) **EP 4 369 483 A2**
(43) Date of publication of application: **15.05.2024**
(21) Application number: 23209461.5
(22) Date of filing: 13.11.2023
(51) Int. Cl.: H01M 50/103, H01M 50/107, H01M 50/15, H01M 50/152, H01M 50/148, H01M 50/169, H01M 50/176, H01M 50/179, H01M 50/193, H01M 50/198, H01M 50/342, H01M 50/375, H01M 50/545, H01M 50/553, H01M 50/559, H01M 50/564

(54) **ELECTROCHEMICAL APPARATUS AND ELECTRIC APPARATUS**

(30) Priority: 14.11.2022 CN 202211420609
(71) Applicant: Ningde Amperex Technology Ltd., Ningde City, Fujian Province 352100 (CN)
(72) Inventor: LI, Jiayuan, Ningde City, Fujian Province 352100 (CN)
(74) Representative: Icosa

(57) **Abstract**

An electrochemical apparatus (1) includes an electrode assembly (40), a housing assembly (10), a conductor (30), and an insulator (20), where the electrode assembly (40) includes a first tab (41), the housing assembly (10) includes a first housing (11) and a second housing (12), the first housing (11) and the second housing (12) define an accommodating space (10a) and the electrode assembly (40) is accommodated in the accommodating space (10a), the first tab (41) is electrically connected to the conductor (30), the insulator (20) is located between the first housing (11) and the conductor (30) to insulate the first housing (11) and the conductor (30), the first housing (11) has a first through-hole (11a), the insulator (20) has a second through-hole, in a first direction (H), a projection of the conductor (30) at least partially falls inside the first through-hole (11a) and the second through-hole, the insulator (20) includes a first insulation layer (21) and a second insulation layer (22), and the first insulation layer (21) is attached to the first housing (11) and located between the first housing (11) and the second insulation layer (22).

## Description

### BACKGROUND

### 1. Technical Field

This application relates to the field of electrochemical apparatus technologies, and in particular, to an electrochemical apparatus and an electric apparatus.

### 2. Description of the Related Art

With the continuous increase in energy density of electrochemical apparatuses used in electric apparatuses such as mobile electronic devices, electric vehicles, and electric tools, dangers such as short circuit, fire, and even explosion are more likely to occur for an electrochemical apparatus. Therefore, arranging an anti-explosion device on an electrochemical apparatus is a common means for ensuring safety of the electrochemical apparatus. Generally, setting a shallow indentation or arranging an explosion-proof valve on the housing of the electrochemical apparatus is a common anti-explosion measure. When the internal gas pressure exceeds the stress designed for the indentation or cracking of the explosion-proof valve, the housing will crack at the position of the indentation or at the explosion-proof valve to release the gas accumulated inside the electrochemical apparatus in a timely manner, so as to avoid explosion of the electrochemical apparatus.

In the related art, the indentation is generally formed by means of etching or stamping. It is difficult to precisely control a size of the indentation. As a result, the indentation is often too deep or shallow. If the indentation is too deep, the housing of the electrochemical apparatus provides insufficient mechanical strength, and the housing tends to fail at the position of the indentation when under external impact, causing electrolyte spill. This impairs the structural stability of the electrochemical apparatus. If the indentation is too shallow, a pressure relief threshold for the housing of the electrochemical apparatus is excessively high, easily causing explosion of the electrochemical apparatus. Moreover, arranging an explosion-proof valve on a housing of each electrochemical apparatus requires high costs on components and complicated processes. Furthermore, the explosion-proof valve will interfere with the electrode assembly, tabs, and other components in the electrochemical apparatus in terms of structure and occupy internal space of the housing, reducing the space utilization inside the housing and then reducing the energy density of the electrochemical apparatus.

### SUMMARY

This application is intended to provide an electrochemical apparatus and an electric apparatus, so as to mitigate the technical problem that the anti-explosion means for the electrochemical apparatus affect the structural stability of the electrochemical apparatus.

According to a first aspect of this application, an electrochemical apparatus is provided, including an electrode assembly, a housing assembly, a conductor, and an insulator. The electrode assembly includes a first tab,.The housing assembly includes a first housing and a second housing,.The first housing and the second housing define an accommodating space and the electrode assembly is accommodated in the accommodating space. The first tab is electrically connected to the conductor, and the insulator is located between the first housing and the conductor to insulate the first housing and the conductor. The first housing has a first through-hole, the insulator has a second through-hole, and in a first direction, a projection of the conductor covers the first through-hole and the second through-hole and at least partially falls inside the first through-hole and the second through-hole, where the first direction is an axial direction of the first through-hole. The insulator includes a first insulation layer and a second insulation layer, and the first insulation layer is attached to the first housing and located between the first housing and the second insulation layer. The first insulation layer has a first melting point Tm (1) and the second insulation layer has a second melting point Tm (2), where 0°C<Tm (2)-Tm (1)≤100°C.

In some implementations of this application, 10°C≤Tm (2)-Tm (1)≤80°C.

In some implementations of this application, 30°C≤Tm (2)-Tm (1)≤60°C. In some implementations of this application, in the first direction, a ratio of a thickness T1 of the first insulation layer to a thickness T2 of the second insulation layer T1:T2 is (0.5-1.5):(1.5-3.5).

In some implementations of this application, the insulator further includes a third insulation layer, the third insulation layer is attached between the conductor and the second insulation layer, and the third insulation layer has a third melting point Tm (3), where 0°C<Tm (2)-Tm (3)≤100°C.

In some implementations of this application, 100°C≤Tm (1)≤130°C, 100°C≤Tm (3)≤130°C, and 130°C<Tm (2)≤180°C.

In some implementations of this application, the thickness T1 of the first insulation layer is that 10 µm≤T1≤30 µm, and a thickness T3 of the third insulation layer is that 10 µm≤T3≤30 µm.

In some implementations of this application, the first insulation layer and the third insulation layer are independently selected from at least one of acrylic modified resin, polyethylene, polypropylene, polyhydroxyacetyl ethylene diamine, or modified polyolefin resin, where the acrylic modified resin may be selected from at least one of Maleic anhydride modified polypropylene or Maleic anhydride polyethylene.

In some implementations of this application, the conductor is located in the accommodating space, the conductor includes a first portion and a second portion. The insulator is connected to the first portion, and the second portion is connected to an edge of the first portion. In the first direction, a thickness of the first portion is H1 and a thickness of the second portion is H2, where H1>H2.

In some implementations of this application, 0.3≤H2/H1≤0.8.

In some implementations of this application, in the first direction, an area of the projection of the conductor is S1, an area of a projection of the first portion is S2, and 0.5≤S2/S1≤0.7.

According to the other aspect of this application, an electric apparatus is provided, including the foregoing electrochemical apparatus.

Beneficial effects of the electrochemical apparatus provided in this application are as follows. On one hand, the first insulation layer with a lower melting point is disposed on a side of the insulator close to the housing assembly. When thermal runaway occurs in the electrochemical apparatus, a temperature in the accommodating space of the housing assembly exceeds the first melting point of the first insulation layer, the first insulation layer melts from a solid state to a liquid state, so that the high-pressure gas in the accommodating space can easily break through the first insulation layer and is discharged to the outside via the first through-hole. This insulator can achieve the purpose of pressure relief and explosion prevention, and it is unnecessary to arrange an extra anti-explosion device on the housing of the electrochemical apparatus, thereby mitigating the technical problem that the structural stability of the electrochemical apparatus is affected by explosion prevention and pressure relief through indentation. On the other hand, the second insulation layer with a higher melting point is disposed on a side of the insulator close to the conductor. During packaging of the conductor and the housing assembly, a heat sealing temperature is between the first melting point of the first insulation layer and the second melting point of the second insulation layer. Therefore, the insulator still has a specific hardness to prevent blurs of the housing assembly and the conductor from piercing through itself, thereby reducing short circuits caused by blurs of the housing assembly and the conductor piercing through the insulator.

### BRIEF DESCRIPTION OF DRAWINGS

To describe the technical solutions in specific embodiments of this application and the prior art more clearly, the following briefly describes the accompanying drawings required for describing the specific embodiments or the prior art. In all accompanying drawings, similar components or parts are generally identified by similar reference signs. In an accompanying drawing, each component or part may not be drawn to scale.
FIG. 1 is a schematic structural diagram of an electrochemical apparatus according to a first embodiment of this application;
FIG. 2 is an enlarged view of position A shown in FIG. 1;
FIG. 3 is a cross-sectional diagram of an electrode assembly of the electrochemical apparatus shown in FIG. 1, observed in a first direction;
FIG. 4 is a schematic structural diagram of an electrochemical apparatus according to a second embodiment of this application;
FIG. 5 is an enlarged view of position B shown in FIG. 4;
FIG. 6 is a schematic structural diagram of an electrochemical apparatus according to a third embodiment of this application;
FIG. 7 is an enlarged view of position C shown in FIG. 6;
FIG. 8 is a schematic structural diagram of an electrochemical apparatus according to a fourth embodiment of this application;
FIG. 9 is an enlarged view of position D shown in FIG. 8; and
FIG. 10 is a schematic block diagram of an electric apparatus according to a fifth embodiment of this application.

### DETAILED DESCRIPTION

The following clearly and completely describes the technical solutions in the embodiments of this application with reference to the accompanying drawings. Apparently, the described embodiments are only some rather than all of the embodiments of this application. The following description of at least one exemplary embodiment is merely illustrative and definitely is not construed as any limitation on this application or on use of this application. All other embodiments obtained by a person having ordinary skill in the art based on the embodiments of this application without creative efforts shall fall within the protection scope of this application.

The technologies, methods, and devices known to those having ordinary skill in the related arts may not be discussed in detail, but where appropriate, the technologies, methods, and devices should be regarded as being authorized as a part of the description.

In the descriptions of this application, it should be noted that, the orientations or positional relationships indicated by the orientation terms "front", "rear", "upper", "lower", "left", "right", "transverse, vertical, perpendicular, horizontal", and "top, bottom", and the like are merely intended for ease and brevity of the description of this application rather than indicating or implying that the apparatuses or components mentioned must have specific orientations, or must be constructed or manipulated according to specific orientations, and therefore shall not be construed as any limitations on embodiments of this application. Orientation terms "inside, outside" refer to the inside and outside of the contour of each component itself.

In the descriptions of this application, it should be noted that, using words such as "first" and "second" to define components is merely for the purpose of distinguishing the components. Unless otherwise stated, the foregoing words do not have special meanings and cannot be construed as any limitations on the protection scope of this application.

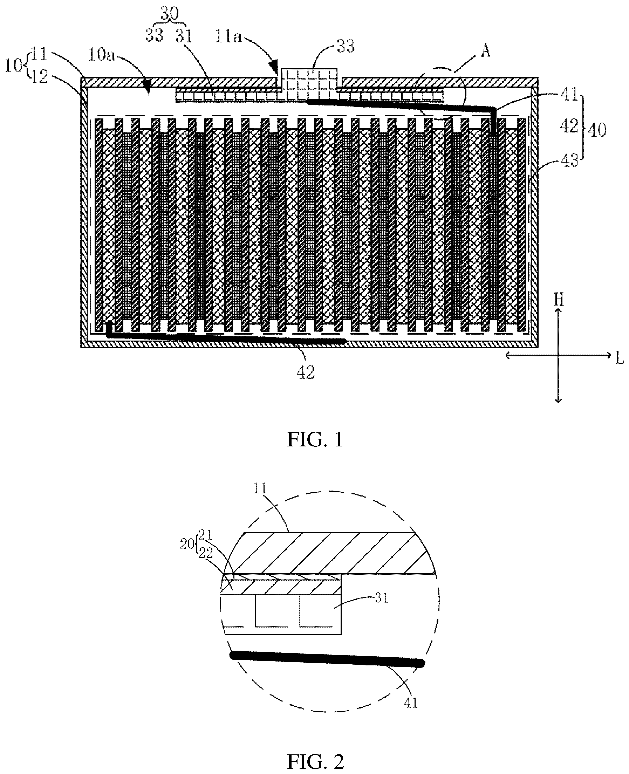

Referring to examples shown in FIG. 1 and FIG. 2, FIG. 1 is a schematic structural diagram of an electrochemical apparatus 1 according to an embodiment of this application, and FIG. 2 is an enlarged view of position A shown in FIG. 1. The electrochemical apparatus 1 includes a housing assembly 10, a conductor 30, an insulator 20, and an electrode assembly 40. The housing assembly 10 serves as a mounting support structure for all parts. The conductor 30 is fixed to the housing assembly 10 by using the insulator 20. The electrode assembly 40 is mounted in the housing assembly 10, and the electrode assembly 40 is electrically connected to the housing assembly 10 and the conductor 30 respectively, where the housing assembly 10 and the conductor 30 are two poles, with opposite polarities, of the electrochemical apparatus 1.

For ease of description, the coordinate system shown in FIG. 1 is used to define directions. A coordinate axis H indicates a first direction. This direction is a height direction of the electrochemical apparatus 1, a direction in which a first housing 11 of the housing assembly 10, the insulator 20, and the conductor 30 are sequentially stacked, and also an axial direction of a first through-hole 11a of the first housing 11. A coordinate axis L indicates a second direction. This direction is a length direction or width direction of the electrochemical apparatus 1, a direction in which a second portion 32 of the conductor 30 extends outsides along a circumferential direction of the first portion 31, and also a radial direction of the first through-hole 11a of the first housing 11. As shown in FIG. 1, the coordinate axis H is perpendicular to the coordinate axis L.

Based on the foregoing definition of directions, specific constructions of the housing assembly 10, the conductor 30, the insulator 20, and the electrode assembly 40 are described below with reference to the implementations illustrated in the accompanying drawings. In the following descriptions, terms indicating the orientations or positional relationships, such as "upper", "lower", "top", and "bottom" are used with regard to the first direction H. Moreover, in absence of conflicts, the technical features involved in different implementations of this application may be combined.

Regarding the housing assembly 10, the housing assembly 10 includes a first housing 11 and a second housing 12 that fits with the first housing 11. The first housing 11 and the second housing 12 are connected in a sealed manner and define an accommodating space 10a therebetween. The accommodating space 10a is used to accommodate the electrode assembly 40. The first housing 11 is not only used for electrical connection with the electrode assembly 40, but also for connecting with and fixing the insulator 20. The first housing 11 is provided with a first through-hole 11a. The first through-hole 11a runs through a surface of the first housing 11 facing the accommodating space 10a and a surface of the first housing 11 away from the accommodating space 10a.

As shown in FIG. 1, in an embodiment of this application, both the first housing 11 and the second housing 12 are made of a conductive material, for example, a conductive metal, a conductive composite material, or a conductive polymer material, etc. The first housing 11 is approximately of a lid structure. The first through-hole 11a is provided in the middle part of the first housing 11. The second housing 12 is approximately of a cylinder structure with an opening on the top. The first housing 11 may be fixed to an end portion on the cylinder wall of the second housing 12 by means of welding, bonding with a sealant, or clamping, so as to seal the opening on the top of the second housing 12. In this way, the accommodating space 10a is formed between the first housing 11 and the second housing 12. It can be understood that a shape of the housing assembly 10 may be adjusted based on actual needs of use. For example, in some other embodiments of this application, the housing assembly 10 may also be in the shape of a regular polyhedron such as a prism, a pyramid, or a cylindroid, etc. It can also be understood that the first through-hole 11a of the first housing 11 is not limited to the round shape shown in FIG. 1. The first through-hole 11a may also be in a regular shape or an irregular shape, which is not specifically limited in this embodiment of this application.

Furthermore, in the embodiment illustrated in FIG. 1, the electrochemical apparatus 1 is a hard-shell electrochemical apparatus. The hard-shell electrochemical apparatus is a type of electrochemical apparatus different from a soft-shell electrochemical apparatus, and has features such as high hardness and high mechanical strength. Specifically, both the first housing 11 and the second housing 12 may be made of a metal conductive material. For example, the first housing 11 and/or the second housing 12 may be made of steel alloy, aluminum alloy, iron alloy, copper alloy, or nickel alloy.

Alternatively, the first housing 11 of the housing assembly 10 is still made of a metal conductive material, and the second housing 12 may be made of plastic resistant to electrolyte corrosion. The first housing 11 may be fixed to the second housing 12 by means of bonding with a sealant or clamping with a buckle structure, implementing a sealed connection therebetween. Specifically, a material resistant to electrolyte corrosion may be polystyrene, polypropylene, polyethylene, polyester, polyvinyl chloride, polyimide, acrylonitrile butadiene styrene plastic, polycarbonate, or polyamide. For example, the second housing 12 is made of polypropylene.

Regarding the insulator 20, the insulator 20 connects and fixes the conductor 30 to the first housing 11 of the housing assembly 10, but also to insulate both, and communicates the accommodating space 10a of the housing assembly 10 with the outside when a temperature threshold is exceeded. It should also be noted that the conductor 30 is fixed to the first housing 11 of the housing assembly 10 through the insulator 20 and seal the first through-hole 11a of the first housing 11. Therefore, the insulator 20 also plays a role in sealing a gap between the conductor 30 and the first housing 11, and the gap communicates with the outside via the first through-hole 11a.

As shown in FIG. 2, in an embodiment of this application, the shape of the insulator 20 matches the shape of the first portion 31 of the conductor 30. The insulator 20 includes a first insulation layer 21 and a second insulation layer 22 attached to the first insulation layer 21. The first insulation layer 21 is bonded to a surface of the first housing 11 facing the accommodating space 10a, and the second insulation layer 22 is bonded to the first portion 31 of the conductor 30. The insulator 20 is provided with a second through-hole (not shown in the figure) that runs through the first insulation layer 21 and the second insulation layer 22. A shape of the second through-hole may be the same as or different from that of the first through-hole 11a of the first housing 11, which is not specifically limited herein. Both the second through-hole and the first through-hole 11a of the first housing 11 are used to expose the first portion 31 of the conductor 30. It is worth mentioning that to ensure the first portion 31 of the conductor 30 is exposed in the first through-hole 11a and the second through-hole, it needs to be satisfied that in the first direction H, a projection of the conductor 30 covers the first through-hole 11a and the second through-hole and at least partially falls inside the first through-hole 11a and the second through-hole simultaneously. In other words, the first through-hole and the second through-hole at least partially overlap when viewed along the first direction. In this way, on the premise of ensuring the sealing of electrochemical apparatus 1, a load of the electrical apparatus can sequentially pass through the first through-hole 11a of the first housing 11 and the second through-hole of the insulator 20 and is then electrically connected to the first portion 31 of the conductor 30. The first insulation layer 21 has a first melting point Tm (1) and the second insulation layer 22 has a second melting point Tm (2), where 0°C<Tm (2)-Tm (1)≤100°C.

Furthermore, in the embodiment illustrated in the figure, a material of the insulator 20 includes acrylic modified resin, polyethylene, polyhydroxyacetyl ethylene diamine, modified polyolefin resin, polyolefin, polyvinyl chloride, fluororubber, other polyolefins and copolymers thereof.

Regarding the conductor 30, as shown in FIG. 1 and FIG. 2, in this embodiment of this application, the conductor 30 is located in the accommodating space 10a of the housing assembly 10, and the conductor 30 has the first portion 31. Approximately in a disc-shaped structure, the first portion 31 is fixed to the surface of the first housing 11 facing the accommodating space 10a through the insulator 20, and covers the entire first through-hole 11a of the first housing 11. A surface of first portion 31 located in the first through-hole 11a is used for electrical connection with the load of the electric apparatus, and a surface of the first portion 31 away from the accommodating space 10a is used for electrical connection with one pole of the electrode assembly 40.

For ease of electrical connection between the electrochemical apparatus 1 and the load of the electric apparatus, the conductor 30 may further have a third portion 33 that is coaxial with the first portion 31. The third portion 33 is a convex structure of the conductor 30 accommodated in the first through-hole 11a. For example, the third portion 33 is formed by projecting a surface of the first portion 31 having no contact with the insulator 20 towards the first through-hole 11a. It can be understood that the construction of the third portion 33 is not specifically limited herein. For example, the third portion 33 may pass through the first through-hole 11a of the first housing 11 and extends out of the housing assembly 10, or the third portion 33 is exposed inside the first through-hole 11a. Certainly, the third portion 33 may be not disposed from the perspective of saving the manufacturing cost of electrochemical apparatus 1. In this case, the load of the electric apparatus sequentially passes through the first through-hole 11a of the first housing 11 and the second through-hole of the insulator 20, and is electrically connected to the surface, of the first portion 31 of the conductor 30, having no contact with the insulator 20.

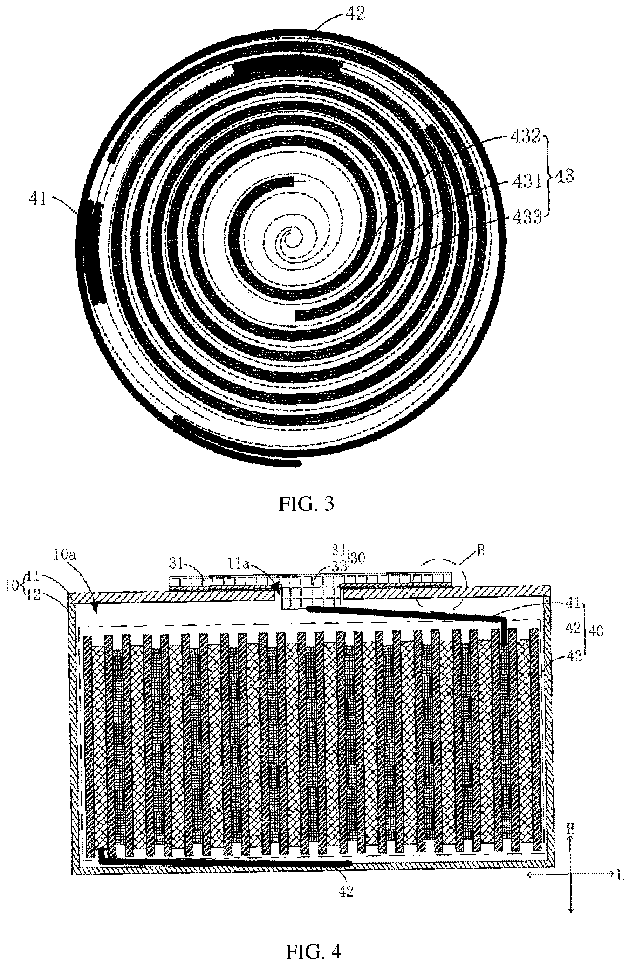

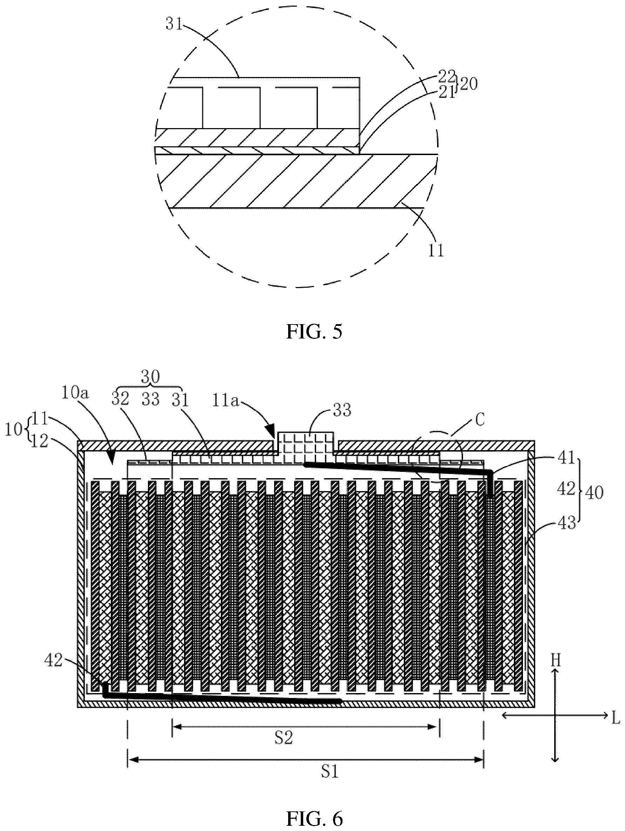

As shown in FIG. 4 and FIG. 5, in another embodiment of this application, the conductor 30 is located outside the accommodating space 10a of the housing assembly 10, and the conductor 30 has the first portion 31 and the third portion 33 that are coaxial. In the shape of a disc, the first portion 31 is fixed to the surface of the first housing 11 away from the accommodating space 10a through the insulator 20, and covers the entire first through-hole 11a of the first housing 11. The third portion 33 is formed by extending the surface of the first portion 31 inside the first through-hole 11a towards the accommodating space 10a. Fixed through the insulator 20, a surface of the third portion 33 facing the accommodating space 10a is used for electrical connection with the electrode assembly 40.

Furthermore, in the embodiment illustrated by the figures, the conductor 30 may be made of a metal conductive material. Specifically, the conductor 30 may be made of steel alloy, aluminum alloy, iron alloy, copper alloy, nickel alloy, or the like. For example, the conductor 30 is made of an iron-carbon alloy (namely, stainless steel) or aluminum.

Regarding the electrode assembly 40, the electrode assembly 40 is a core component for charging and discharging the electrochemical apparatus 1. As shown in FIG. 3, in this embodiment of this application, the electrode assembly 40 includes a first tab 41, a second tab 42, and a bare battery cell 43. The bare battery cell 43 is accommodated in the accommodating space 10a of the housing assembly 10, and includes a first electrode plate 431, a second electrode plate 432, and a separator 433 that are stacked. The separator 433 separates the first electrode plate 431 from the second electrode plate 432. After being wound, the first electrode plate 431, the second electrode plate 432, and the separator 433 together form a cylinder structure. An axial direction for winding the bare battery cell 43 is parallel to the first direction H. One end of the first tab 41 is electrically connected to a current collector of the first electrode plate 431, and another end of the first tab 41 is electrically connected to the first portion 31 and the second portion 32 of the conductor 30. One end of the second tab 42 is electrically connected to a current collector of the second electrode plate 432, and another end of the second tab 42 is electrically connected to the first housing 11 of the housing assembly 10. One of the first electrode plate 431 and the second electrode plate 432 is a positive electrode plate and the other one is a negative electrode plate. Certainly, in some other embodiments, the bare battery cell 43 may also be a stacked structure. The specific structure of the bare battery cell 43 is not limited in this application. In addition, the electrochemical apparatus 1 includes an electrolyte filled in the accommodating space 10a, and the bare battery cell 43 is immersed in the electrolyte. It can be understood that when the first housing 11 and the second housing 12 of the housing assembly 10 are both made of a conductive metal material and are electrically connected, the another end of the second tab 42 of the electrode assembly 40 is not limited to being electrically connected to the first housing 11, but may also be electrically connected to the second housing 12. The way how the another end of the second tab 42 is connected to the first housing 11 and/or the second housing 12 is not specifically limited in this embodiment of this application.

A pressure relieving theory of the electrochemical apparatus 1 is described below. Generally, the electrochemical apparatus 1 relieves pressure in the following way. Fixed by the insulator 20, the first portion 31 of the conductor 30 is tightly attached to the first housing 11 of the housing assembly 10. The insulator 20 is located between the first portion 31 of the conductor 30 and the first housing 11 and seals the gap therebetween, so as to isolate the accommodating space 10a of the housing assembly 10 from the outside. In this case, the accommodating space 10a of the housing assembly 10 is under a normal reaction temperature and pressure, so the normal reaction temperature does not exceed the first melting point of the first insulation layer 21 of the insulator 20, and the first insulation layer 21 of the insulator 20 is in a solid state.

When thermal runaway occurs in the electrochemical apparatus 1, the temperature in the accommodating space 10a of the housing assembly 10 exceeds the first melting point of the first insulation layer 21. For example, the first melting point of the first insulation layer 21 is 130°C, and the first insulation layer 21 of the insulator 20 melts from the solid state to a liquid state when the temperature exceeds the first melting point. In this case, the bonding force between the conductor 30 and the first housing 11 continues to decrease, and the pressure inside the accommodating space 10a continues to increase. When the pressure inside the accommodating space 10a exceeds a threshold of bonding strength between the conductor 30 and the first housing 11, a crack is caused between the conductor 30 and the first housing 11. The crack communicates with the outside via the first through-hole 11a to form a pressure relieving passage, and both heat and gas in the accommodating space 10a can be discharged through the pressure relieving passage, achieving safe use of the electrochemical apparatus 1.

In conclusion, for the electrochemical apparatus 1 according to the embodiments of this application: on one hand, the first insulation layer 21 with a lower melting point is disposed on a side of the insulator 20 close to the housing assembly 10. When thermal runaway occurs in the electrochemical apparatus 1, the temperature in the accommodating space 10a of the housing assembly 10 exceeds the first melting point of the first insulation layer 21, the first insulation layer 21 melts from a solid state to a liquid state, so that the high-pressure gas in the accommodating space 10a can easily break through the first insulation layer 21 and is discharged to the outside via the first through-hole 11a. The insulator 20 can achieve the purpose of pressure relief and explosion prevention, and it is unnecessary to arrange an extra anti-explosion device on the housing assembly 10 of the electrochemical apparatus 1, thereby mitigating the technical problem that the structural stability of the electrochemical apparatus is affected by explosion prevention and pressure relief through indentation. On the other hand, the second insulation layer 22 with a higher melting point is disposed on a side of the insulator 20 close to the conductor 30. During packaging of the conductor 30 and the housing assembly 10, a heat sealing temperature is between the first melting point of the first insulation layer 21 and the second melting point of the second insulation layer 22. Therefore, the insulator 20 still has a specific hardness to prevent blurs of the housing assembly 10 and the conductor 30 from piercing through itself, thereby reducing short circuits caused by blurs of the housing assembly 10 and the conductor 30 piercing through the insulator 20.

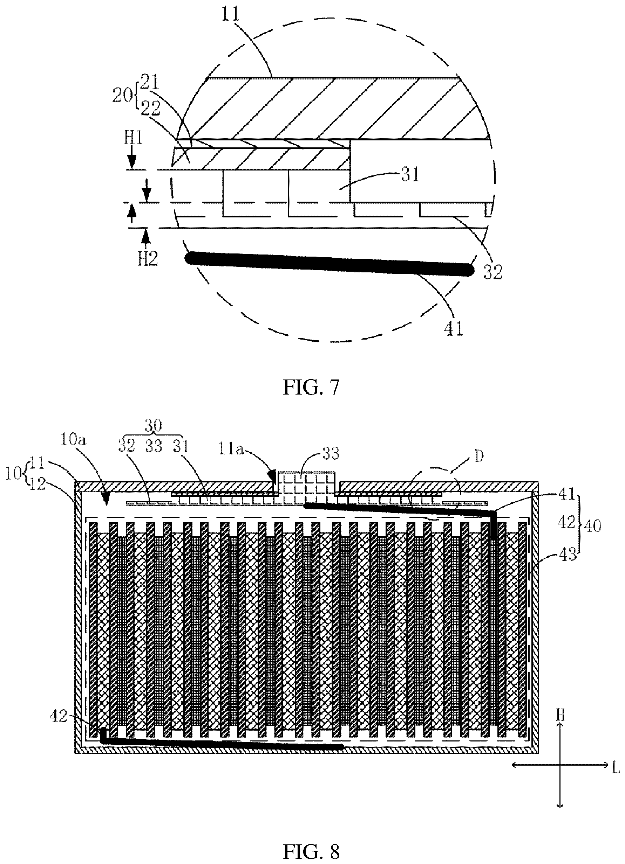

Referring to examples shown in FIG. 6 and FIG. 7, the conductor 30 has a second portion 32 that is coaxial with the first portion. The second portion 32 is formed by extending periphery of an end, of the first portion 31, away from the insulator 20 along a circumferential direction. A thickness H1 of the first portion 31 in the first direction H is greater than a thickness H2 of the second portion 32 in the first direction H. Fixed by the insulator 20, the second portion 32 and the first housing 11 are arranged opposite each other, and a gap is provided therebetween for communicating with the accommodating space 10a of the housing assembly 10. Both the second portion 32 and the first portion 31 of the conductor 30 are used for electrical connection with the electrode assembly 40. In this way, when thermal runaway occurs in the electrochemical apparatus 1, both the first housing 11 of housing assembly 10 and the second portion 32 of conductor 30 suffer from gas pressure within the accommodating space 10a. Therefore, the conductor 30 is under a force of running away from the housing assembly 10, reducing the gas pressure required for breaking the first insulation layer 21 of the insulator 20. This facilitates detaching the conductor 30 from the first housing 11, and makes a heat dissipation and exhaust rate higher than an internal system runaway rate, further improving the safety and reliability of the electrochemical apparatus 1. It should be noted that: the first portion 31 of the conductor 30 covering the entire first through-hole 11a of the first housing 11 specifically means that observed in the first direction H, a projection of the first through-hole 11a of the first housing 11 onto the first portion 31 falls within the first portion 31 of the conductor 30.

Further, the thickness H1 of the first portion 31 and the thickness H2 of the second portion 32 satisfy that: 0.3≤H2/H1≤0.8. In other words, when the ratio of H2 to H1 is less than 0.3, the second portion is relatively thin. In this case, the difficulty of manufacturing and processing conductor 30 is increased, causing a lower yield rate of the conductor 30 and a decrease in the mechanical strength of this part. As a result, the conductor 30 tends to bend under high pressure, causing functional failure of the second portion 32. To be specific, it is difficult to detach the conductor 30 from the first housing 11 under acting force of the high-pressure gas. When the ratio of H2 to H1 is greater than 0.8, a spacing between the second portion 32 and the first housing 11 is small, short circuit is more easily caused by contact between the second portion 32 and the first housing 11. For example, the thickness H1 of the first portion 31 of the conductor 30 is 0.15 mm, and the thickness H2 of the second portion 32 of the conductor 30 is 0.07 mm.

Further, in the first direction H, an area of the projection of the conductor 30 is S1, an area of the projection of the first portion 31 of the conductor 30 is S2, and 0.5≤S2/S1≤0.7. In other words, when the ratio of S2 to S1 is less than 0.5, the ultimate bonding strength between the conductor 30 and the insulator 20 will inevitably decrease due to a limited area of contact therebetween. In this case, it is difficult to ensure an effective area of packaging of the first portion 31 of the conductor 30 and the first housing 11, impairing the sealing between the conductor 30 and the first housing 11. When the ratio of S2 to S1 is greater than 0.7, the second portion 32 of conductor 30 occupies a smaller area. Under high pressure conditions, the conductor 30 is restricted from detaching from the housing assembly 10, thereby increasing the pressure relief threshold of the electrochemical apparatus.

To ensure safety and control waste of performance while reducing the material cost, further, 10°C≤Tm (2)-Tm (1)≤80°C. When a difference in melting points between the first insulation layer 21 and the second insulation layer 22 is small, for example, less than 10°C, the first insulation layer 21 will still melt to form a pressure relieving passage, but a melting temperature of the first insulation layer 21 is close to that of the second insulation layer 22. In the case of thermal runaway in the electrochemical apparatus 1, if the first insulation layer 21 fails to melt and form a pressure relieving passage in a timely manner, the temperature in the electrochemical apparatus 1 will continue to rise and easily reach the melting temperature of the second insulation layer 22, leaving an insufficient safety margin. When the difference in melting points between the first insulation layer 21 and the second insulation layer 22 is large, for example, greater than 80°C, the safety margin is excessively large, causing performance waste and cost increase. When the difference in melting points between the first insulation layer 21 and the second insulation layer 22 is within the foregoing numerical range, the difference in melting points between the first insulation layer 21 and the second insulation layer 22 is relatively small, and less time is needed to melt only the first insulation layer 21. In this case, a pressure relieving passage can be formed in a timely manner between the accommodating space 10a of the housing assembly 10 and the outside, thereby leaving a sufficient safety margin and reducing material costs.

To reduce the packaging difficulty and manufacturing costs of the electrochemical apparatus, preferably, 30°C≤Tm (2)-Tm (1)≤60°C. According to packaging of the electrochemical apparatus, the first insulation layer 21 and the second insulation layer 22 can be thermally bonded to the first housing 11 and the conductor 30 respectively only when the temperature is raised to be higher than a composite temperature at which the second insulation layer 22 melts. If the difference in melting points between the first insulation layer 21 and the second insulation layer 22 is excessively large, fluidity of the first insulation layer 21 is relatively high at the composite temperature, and serious glue overflow will occur. In addition to increasing the packaging difficulty and manufacturing costs, glue overflow will also invade the internal space of the electrochemical apparatus, and causes problems such as short circuit due to a pierced insulation glue or separator in the electrode assembly in the case of drop, impact, and the like. To improve the bonding performance of the insulator 20 and further reduce the packaging difficulty of the first housing 11 and the conductor 30, further, in the first direction H, a ratio of a thickness T1 of the first insulation layer 21 to a thickness T2 of the second insulation layer 22 T1:T2 is (0.5-1.5):(1.5-3.5). For example, 10 µm≤T1≤30 µm. With the thickness being in this numerical range, the first insulation layer 21 provides good adhesion and is thinner. And 60 µm≤T2≤90 µm, with the thickness being in this numerical range, the second insulation layer 22 can be kept stable and undeformed and has appropriate hardness and flexibility, which is conducive to packaging of the first housing 11 and the conductor 30.

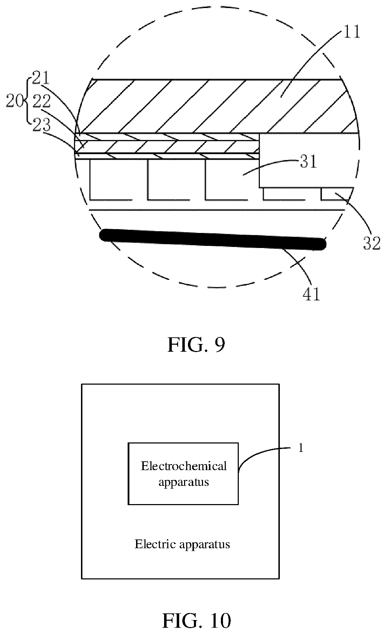

To improve the performance of bonding between the insulator 20 and the conductor 30 and reduce the packaging difficulty of the first housing 11 and the conductor 30, as shown in FIG. 8 and FIG. 9, the insulator 20 may further include a third insulation layer 23 that is attached to a surface of the second insulation layer 22 away from the first insulation layer 21. In this case, the first insulation layer 21, the second insulation layer 22, and the third insulation layer 23 are integrally formed, The second insulation layer 22 is bonded to the first portion 31 of the conductor 30 through the third insulation layer 23, and the second through-hole runs through the third insulation layer 23 accordingly. The third insulation layer 23 has a third melting point Tm (3), and 0°C<Tm (3)-Tm (2)≤100°C. Because the melting points of the third insulation layer 23 and the first insulation layer 21 are both lower than the melting point of the second insulation layer 22, the first insulation layer 21 and the third insulation layer 23 can be thermally bonded to the first housing 11 and the conductor 30 respectively only when the composite temperature is raised to be higher than a composite temperature at which the third insulation layer 23 melts. Compared with the insulator 20 where the first insulation layer 21 and the second insulation layer 22 are integrally formed, this further mitigates the problem of serious glue overflow caused by a high fluidity of the first insulation layer 21 at the composite temperature. In addition, the third insulation layer is preferably made of a material that is the same for the first insulation layer.

The electrochemical apparatus 1 may be manufactured using the following method.

Design of the insulator 20: the insulator 20 is an integrated structure that is formed by sequentially stacking the first insulation layer 21, the second insulation layer 22, and the third insulation layer 23, with a total thickness of 150 µm and a thickness ratio of the first insulation layer 21:the second insulation layer 22:the third insulation layer 23 being 1:3:1. The melting point range of the first insulation layer 21 and the third insulation layer 23 is 100°C-130°C. For example, the first insulation layer 21 and the third insulation layer 23 have the same melting point of 123°C and are made of modified polypropylene resin. The melting point range of the second insulation layer 22 is 130°C-180°C. For example, the second insulation layer 22 has a melting point of 165°C and is made of polypropylene.

Design of the conductor 30: the conductor 30 is a conductive metal structure integrally formed by the first portion 31, the second portion 32, and the third portion 33. The first portion 31 has a diameter of 5.3±0.05 mm and a thickness of 0.15±0.015 mm, the second portion 32 has a diameter of 8.3±0.05 mm and a thickness of 0.07±0.015 mm, and the third portion 33 has a diameter of 3±0.05 mm and a thickness of 0.53±0.02 mm.

The housing assembly 10 and the conductor 30 are connected and fixed through the insulator 20. The first housing 11 has a diameter of 10.03±0.04 mm and a thickness of 0.2 (+0.02/-0.01) mm. A hot pressing temperature is 125±20°C, hot pressing pressure is 60±30 Kg, and hot pressing time is 5-15s. When the hot pressing temperature reaches the melting point of the first insulation layer 21 and the third insulation layer 23, the two melt and are bonded with the first housing 11 and the first portion 31 of the conductor 30 respectively, so as to complete the packaging of the conductor 30 and the housing assembly 10.

No improvement is provided regarding the preparation and assembly methods of the electrode assembly 40 and other parts. Details are not repeated herein.

Based on the same technical conception, refer to the example illustrated in FIG. 10. FIG. 10 is a schematic block diagram of an electric apparatus according to an embodiment of this application. The electric apparatus includes the electrochemical apparatus 1 provided in the foregoing solution, and the electrochemical apparatus 1 is used to supply electric energy for the electric apparatus. It can be understood that the electric apparatus according to this embodiment of this application is not specifically limited. The foregoing electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an electric vehicle, an automobile, a motorcycle, a power-assisted bicycle, a bicycle, a lighting appliance, a toy, a game console, a clock, an electric tool, a flash lamp, a camera, a large household power-storing electrochemical apparatus 1, a lithium-ion capacitor, or the like.

The foregoing descriptions are merely some embodiments of this application, but are not intended to limit the patent scope of this application. Any equivalent structure or equivalent process transformations made using the descriptions and accompanying drawings of this application, or directly or indirectly applied in other related technical fields, are equally included in the scope of patent protection of this application.

## Claims

1. An electrochemical apparatus (1), comprising an electrode assembly (40), a housing assembly (10), a conductor (30), and an insulator (20); **characterized in that**,
the electrode assembly (40) comprises a first tab (41);
the housing assembly (10) comprises a first housing (11) and a second housing (12);
the first housing (11) and the second housing (12) define an accommodating space (10a) and the electrode assembly (40) is accommodated in the accommodating space (10a);
the first tab (41) is electrically connected to the conductor (30);
the insulator (20) is located between the first housing (11) and the conductor (30) ;
the first housing (11) has a first through-hole (11a);
the insulator (20) has a second through-hole;
in a first direction (H), a projection of the conductor (30) covers the first through-hole (11a) and the second through-hole;
the first through-hole (11a) and the second through-hole at least partially overlap when viewed along the first direction; **characterized in that**,
the first direction (H) is an axial direction of the first through-hole (11a);
the insulator (20) comprises a first insulation layer (21) and a second insulation layer (22);
the first insulation layer (21) is attached to the first housing (11) and located between the first housing (11) and the second insulation layer (22);
the first insulation layer (21) comprises at least one selected from the group consisting of acrylic modified resin, polyethylene, polypropylene, polyhydroxyacetyl ethylene diamine, and modified polyolefin resin;
the first insulation layer (21) has a first melting point Tm (1);
the second insulation layer (22) comprises at least one selected from the group consisting of acrylic modified resin, polyethylene, polyhydroxyacetyl ethylene diamine, modified polyolefin resin, polyolefin, polyvinyl chloride, fluororubber, other polyolefins and copolymers thereof;
the second insulation layer (22) has a second melting point Tm (2); **characterized in that**, 0°C<Tm (2)-Tm (1)≤100°C.

2. The electrochemical apparatus (1) according to claim 1, **characterized in that**, 10°C≤Tm (2)-Tm (1)≤80°C.

3. The electrochemical apparatus (1) according to claim 2, **characterized in that**, 30°C≤Tm (2)-Tm (1)≤60°C.

4. The electrochemical apparatus (1) according to any one of claims 1-3, **characterized in that**, in the first direction (H), a ratio of a thickness T1 of the first insulation layer (21) to a thickness T2 of the second insulation layer (22) T1:T2 is (0.5-1.5):(1.5-3.5).

5. The electrochemical apparatus (1) according to any one of claims 1-4, **characterized in that**,
the insulator (20) further comprises a third insulation layer (23);
the third insulation layer (23) is attached between the conductor (30) and the second insulation layer (22); and
the third insulation layer (23) has a third melting point Tm (3), **characterized in that**, 0°C<Tm (2)-Tm (3)≤100°C.

6. The electrochemical apparatus (1) according to claim 5, **characterized in that**,
100°C≤Tm (1)≤130°C;
100°C≤Tm (3)≤130°C; and
130°C<Tm (2)≤180°C.

7. The electrochemical apparatus (1) according to claim 5 or 6, **characterized in that**,
the thickness T1 of the first insulation layer (21) is 10 µm≤T1≤30 µm; and
a thickness T3 of the third insulation layer (23) is 10 µm≤T3≤30 µm.

8. The electrochemical apparatus (1) according to any one of claims 5-7, **characterized in that**, the third insulation layer (23) comprises at least one selected from the group consisting of acrylic modified resin, polyethylene, polypropylene, polyhydroxyacetyl ethylene diamine, and modified polyolefin resin.

9. The electrochemical apparatus (1) according to any one of claims 1-8, **characterized in that**,
the conductor (30) is located in the accommodating space (10a);
the conductor (30) comprises a first portion (31) and a second portion (32);
the insulator (20) is connected to the first portion (31);
the second portion (32) is connected to an edge of the first portion (31); and
in the first direction (H), a thickness of the first portion (31) is H1 and a thickness of the second portion (32) is H2, **characterized in that**, H1>H2.

10. The electrochemical apparatus (1) according to claim 9, **characterized in that**,0.3≤H2/H1≤0.8.

11. The electrochemical apparatus (1) according to claim 9, **characterized in that**, in the first direction (H), an area of the projection of the conductor (30) is S 1, an area of a projection of the first portion (31) is S2, and 0.5≤S2/S1≤0.7.

12. An electric apparatus, comprising the electrochemical apparatus (1) according to any one of claims 1 to 11.
